# EUROPEAN PATENT SPECIFICATION

(11) **EP 2 853 447 B1**
(45) Date of publication and mention of the grant of the patent: **27.04.2016**
(21) Application number: 14179308.3
(22) Date of filing: 31.07.2014
(51) Int. Cl.: B60R 7/02, E05D 3/18

(54) **Vehicle internal fitting element with tipping closing hatch**
Farhzeug-Inneneinbauelement mit kippbarem Deckel
Composant d'intérieur d'automobile avec un couvercle basculant

(30) Priority: 26.09.2013 IT PD20130264
(43) Date of publication of application: 01.04.2015
(73) Proprietor: Francom S.P.A., 36022 Cassola (VI) (IT)
(72) Inventor: Comunello, Luca, I-36022 Cassola, Vicenza (IT)
(74) Representative: Zanettin, Gianluigi

(56) References cited:
- FR-A1- 2 941 895
- US-A1- 2008 301 909

## Description

### Field of application

The object of the present invention is an internal fitting element for vehicles with tipping closing hatch.

In particular, the internal fitting element according to the invention may find application in the construction of furniture with shelves with closing hatches or structures for the enhancement of confined spaces, such as wheel-arch covers.

### Background art

In the field of the internal fittings of motor vehicles, furniture with shelves or structures for the enhancement' of confined spaces, such as wheel-arch covers, provided with closing hatches of the compartments are known. FR 2 941 895 A1 discloses an internal fitting element according to the preamble of claim 1.

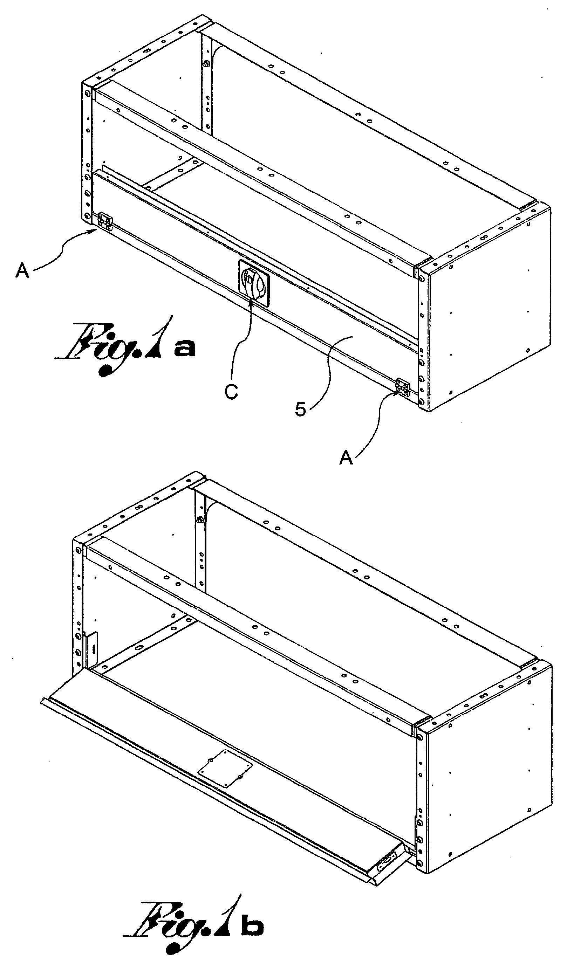

A known solution envisages fixing hatch S to the support structure of the fitting element through external hinges A, as shown in Figures 1a and 1b. In this way, the hatch can be fully opened leaving the access opening to the compartment completely free. The limit of this solution lies in the fact that the hinges restrict the movement of the hatch to a simple movement of rotation. In order to lock the hatch in the closed position it is therefore necessary to use mobile means, for example of the retractable type, such as a bolt C. This complicates not only the structure of the hatch, which must be provided with a mechanism for moving the movable closing means, but also its mounting. In fact, the position of the hatch with respect to the fixed abutments of the bolt must be suitably adjusted.

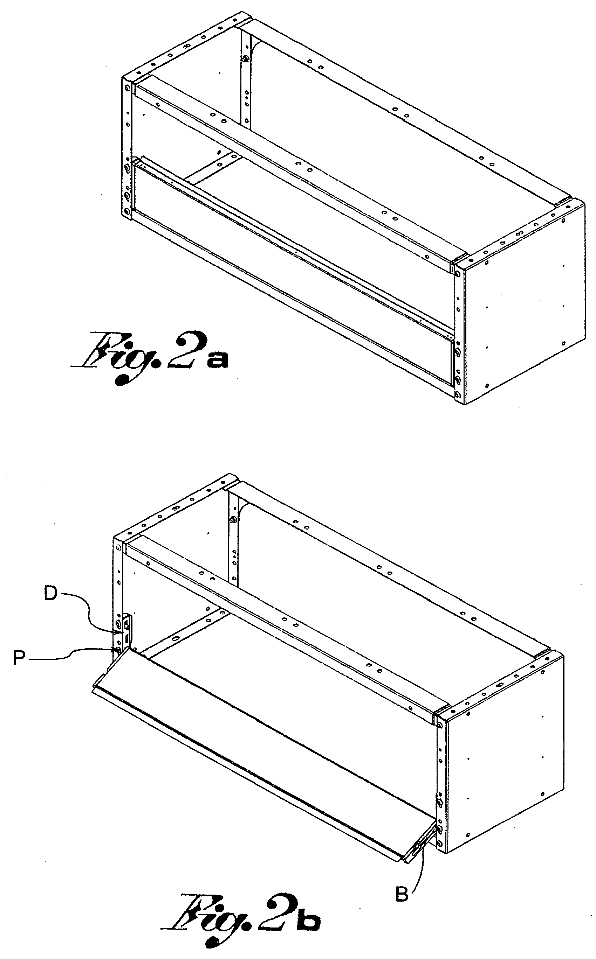

An alternative solution envisages that the hinges are replaced by two fixed rotation pins arranged on the fixed structure at the cornice that delimits the opening to be closed, as shown in Figures 2a and 2b. Pins P engage in slotted openings B that are formed on the hatch and allow roto-translation motions to the latter. In order to lock the hatch in the closed position it is therefore possible to use fixed means D arranged on the support structure, engageable or disengageable from the hatch by means of roto-translational movements. This is therefore a very simple and economic solution. Compared to the solution with hinges, the main limit is the fact that, once opened, the hatch continues to obstruct part of the opening, thus reducing the accessibility of the internal compartment. Furthermore, because of the greater freedom of movement, the hatch is more labile in the opening-closing movement. It can therefore happen that the hatch arranges itself obliquely with respect to the normal axis of rotation, making the movement not very smooth or even preventing it due to jamming. In the case of hatchs having a significant length development (for example exceeding 100 cm), the user may be forced to use both hands to guide the opening and closing hatch.

### Disclosure of the invention

Therefore, the object of the present invention is to eliminate the drawbacks of the prior art cited above, by providing an internal fitting element for vehicles with tipping closing hatch that allows arranging the hatch in opening fully out of the compartment but without using external hinges.

A further object of the present invention is to provide an internal fitting element for vehicles with tipping closing hatch that can be opened and closed in an easy and practical way with smooth movements and without the risk of jamming.

A further object of the present invention is to provide an internal fitting element for vehicles with tipping closing hatch that is simple and inexpensive to make.

### Brief description of the drawings

The technical features of the invention, according to the above objects, are clearly found in the contents of the claims below and the advantages of the same will appear more clearly from the following detailed description, made with reference to the annexed drawings, which show one or more purely exemplifying and nonlimiting embodiments thereof, in which:
- Figures 1 a-b and 2 a-b respectively show two perspective views of two traditional solutions of an internal fitting element for vehicles, shown with closing hatch closed and open;

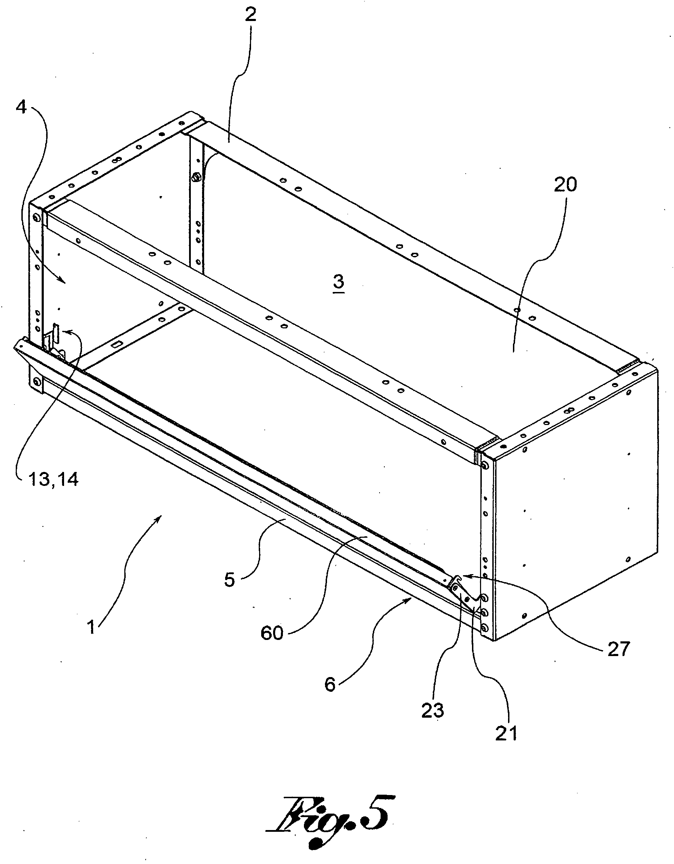

- Figures 3 to 6 show in a sequence the steps of opening the access hatch of an internal fitting element for vehicles according to a preferred embodiment of the invention;
- Figures 7 to 10 show four orthogonal sectional views of a detail of the internal fitting element shown in Figures 3 to 6 relating to pivot means of the access hatch to the support structure, such means being shown in the various positions taken in the sequence of opening the hatch;
- Figures 11 to 14 show in perspective the details shown in Figures 7 to 10; and
- Figure 15 shows a partially exploded view of a detail concerning pivot means of the access hatch to the support structure.

### Detailed description

With reference to the annexed drawings, reference numeral 1 globally denotes an internal fitting element for vehicles with tipping closing hatch according to the invention. In particular, in the attached figures the internal fitting element 1 according to the invention is depicted as a wheel-arch cover structure.

Herein and in the following description, reference will be made to the internal fitting element 1 in use condition. Therefore, any references to a lower or upper position should be interpreted in such condition.

According to a general embodiment of the invention, the internal fitting element 1 comprises:
- a support frame 2, which delimits internally at least one chamber 3 accessible via at least one opening 4 which is formed on frame 2 and is delimited by a cornice 5; and
- at least one access hatch 6, which is arranged to at least partial close such an opening 4.

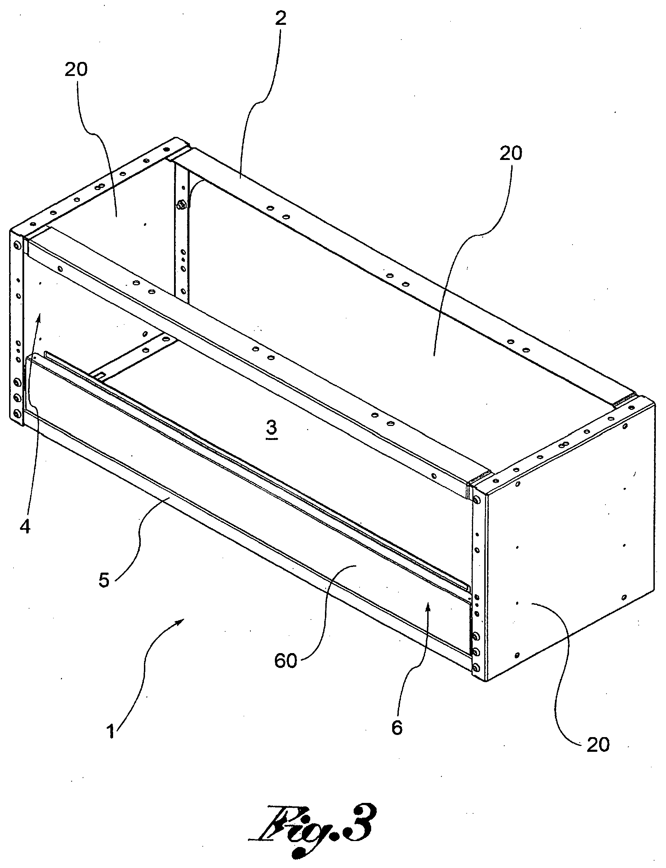

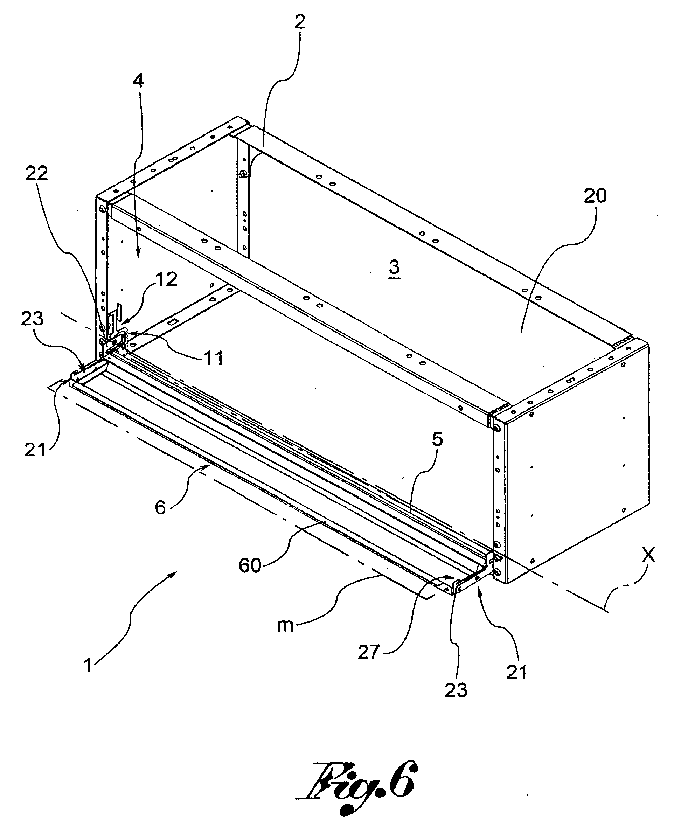

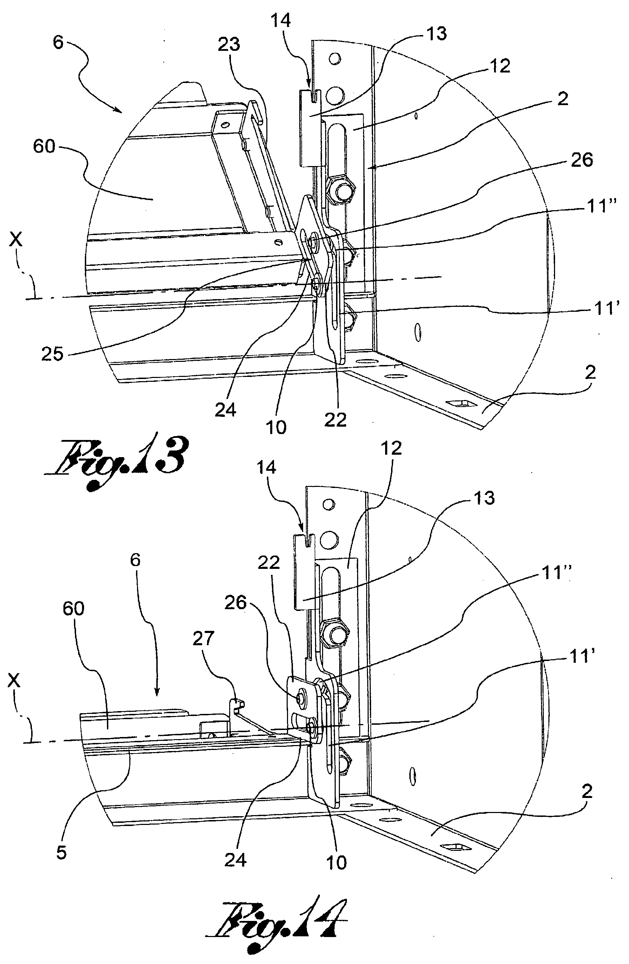

The access hatch 6 is connected to frame 2 so as to tip by means of pivot means 10 which define a rotation axis X around which the access hatch 6 can rotate to shift between a closed position (see Figures 3, 7 and 11) and an open position (see Figures 6, 10 and 14).

In particular, frame 2 may define a closed box-shaped structure in all of its side (with the exception of the opening) by closing panels, as in the case of furniture or cabinets with shelves. Alternatively, frame 2 may define an open support frame, possibly provided on some sides with closing panels 20, intended to encompass portions of the vehicle protruding inside the compartment, such as wheel arches, so as to create around such portions a support structure for other fitting elements and at the same time create a compartment usable as cargo space.

Advantageously, the internal fitting element 1 may comprise two or more access hatches. In particular, the same opening can be closed by two separate hatches. In the following description, for simplicity of description, we will continue to refer to a single access hatch, while remaining understood that the description can be referred also to the case of two or more hatches for the same opening or two or more hatches on multiple openings in the same fitting element.

Cornice 5 which delimits opening 4 defines a seat at which the hatch is arranged in the closed position. In particular, said seat can be defined by profiled elements, in particular angular in shape, as shown in the accompanying Figures. Preferably, in the closed position, hatch 6 is aligned with the outer surface of frame 2.

The access hatch 6 can close the opening completely or also only in part, as shown in the accompanying Figures.

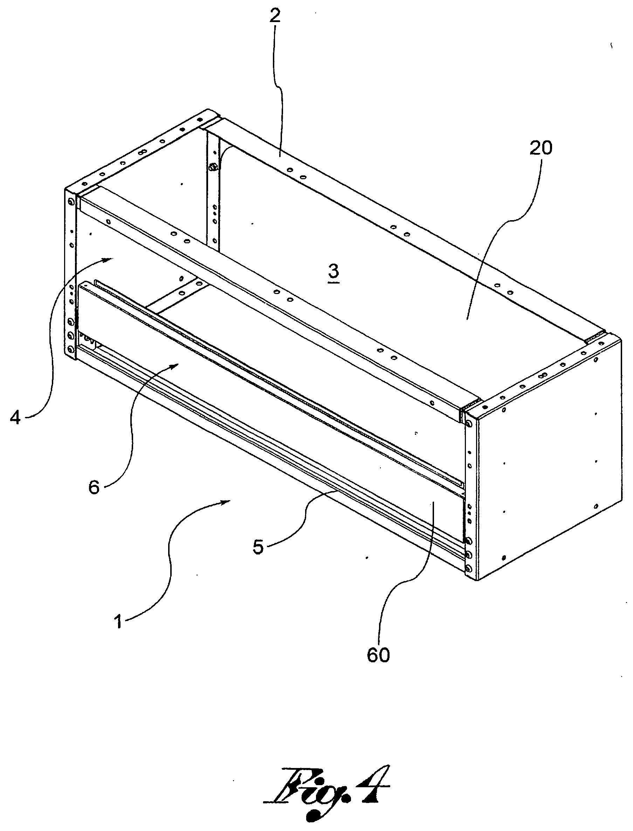

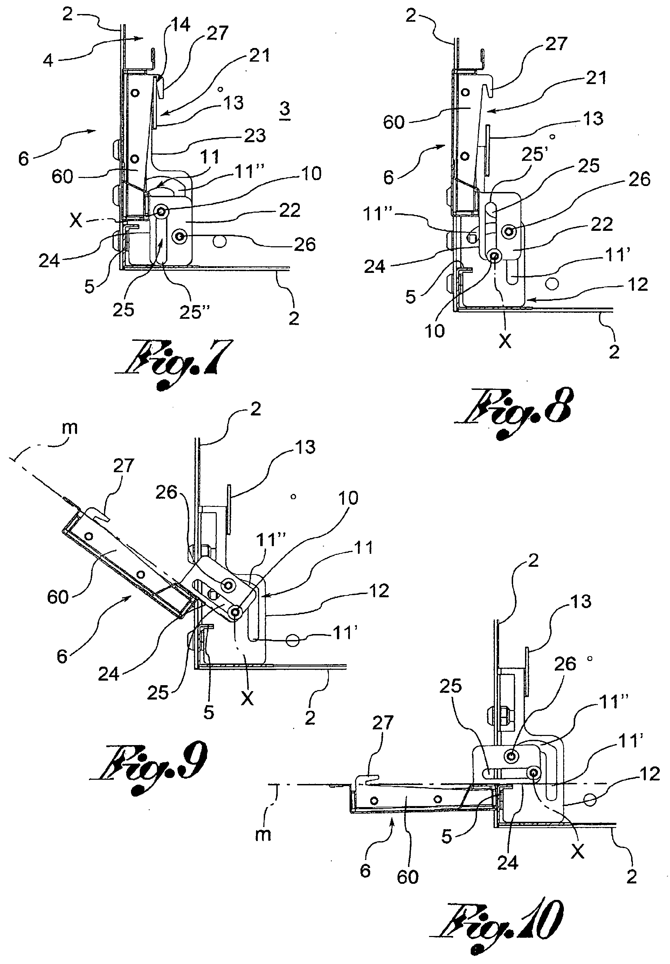

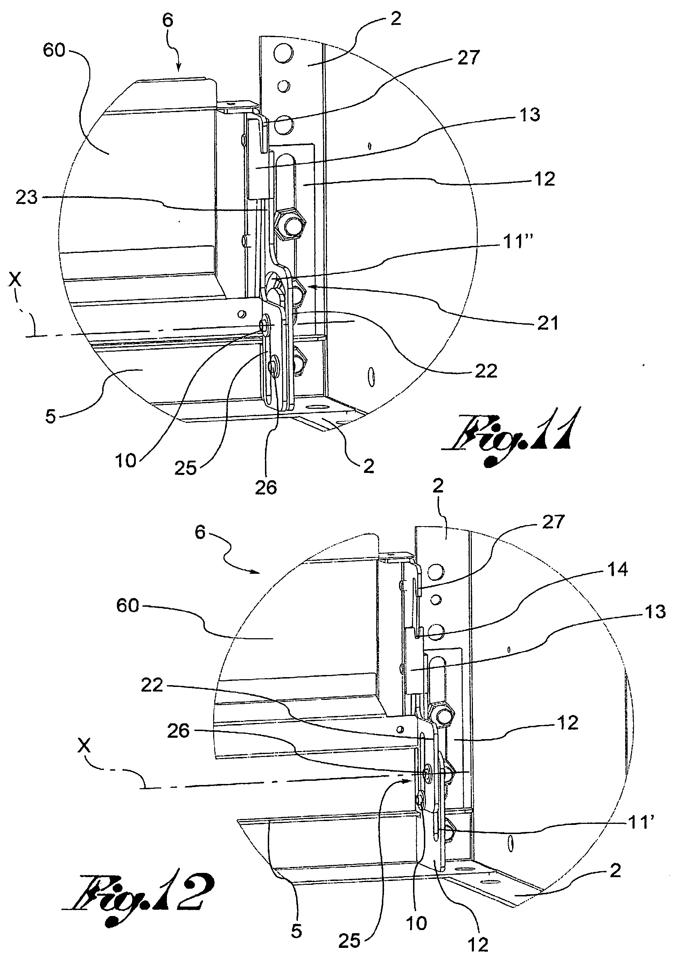

As shown in Figures 4, 8 and 12, the access hatch is translatable with respect to the cornice to shift between an engagement position (see Figures 7 and 11) and a release position (Figures 8 and 12) relative to locking means of the access hatch associated with frame 2. In this way, it is possible to use locking means of the fixed type, which are much simpler to implement and install than movable ones, such as the bolt-like ones.

According to a first essential feature of the invention, the rotation axis X of the access hatch 6, defined by the pivot means 10, is rearward of said cornice 5 inside chamber 3.

According to a further essential feature of the invention, the access hatch is mechanically connected to the pivot means 10 by means of at least one arm 21, which is sized such that in the open position, the access hatch is arranged completely outside the opening (figure 10).

Thanks to the invention, as shown clearly in Figures 6 and 10, without using hinges fixed externally to the frame in the vicinity of the edge of the opening, in the open position the access hatch 6 is arranged completely outside opening 4 and no portion remains to partially occupy the same opening. The only part that is positioned within the opening is the arm which acts as a connection between the access hatch and the pivot means arranged inside the chamber. As will be resumed hereafter, since it is a mechanical connection element and needs not perform the function of filling the opening, the arm has dimensions not even comparable even to the access hatch. In any case, preferably the arm (or the two arms as preferably envisioned) is arranged at the end of the opening where their presence is less relevant.

Preferably, as shown in Figures 6, 10 and 14, arm 21 is sized in such a way that in the open position at least body 60 of the access hatch 6 positions itself outside the space in front of the access opening 4 to the chamber.

By "body of the access hatch" it is meant the main part of the access hatch which acts as a closing panel. By "space in front of the opening" it is meant the space defined by an orthogonal projection of the profile of the opening outside the frame. Operationally, this external space is needed for easy access to the chamber through the opening. In particular, in the case shown in the Figures, where the access hatch 6 is arranged to close the lower portion of opening 4 of a wheel arch cover, body 60 of the access hatch is arranged so that in the open position, it is not only external to the opening but also below the lower portion of the cornice, so as not to be of any hindrance to access chamber 3.

Advantageously, said at least one arm 21 is arranged at one of the two ends of the access hatch 6 with respect to a development direction parallel to the rotation axis X. In this position, the dimensions of the arm are the shortest possible.

Preferably, as shown in particular in Figure 6, the internal fitting element 1 comprises two arms 21, arranged at the two ends of the access hatch 6 with respect to the development direction of the access hatch parallel to the rotation axis X. This configuration allows a more balanced distribution of stresses compared to a solution with a single arm at one end only, and thus a higher mechanical reliability.

In the following description, for simplicity of description we will continue to refer to a single arm, while remaining understood that the description may refer also to the case of two arms for the same access hatch.

According to a preferred embodiment, arm 21 comprises an abutment surface 24 at which it abuts on cornice 5 when brought in the open position, as shown in particular in figure 10. The abutment surface 24 of the arm defines the surface beyond which the whole body of the access hatch must be arranged outside of the space in front of the opening when the access hatch is in the open position. In other words, the access hatch 6 is connected to arm 21 in such a way that the body of the access hatch does not intersect a plane m coplanar with the abutment surface 24.

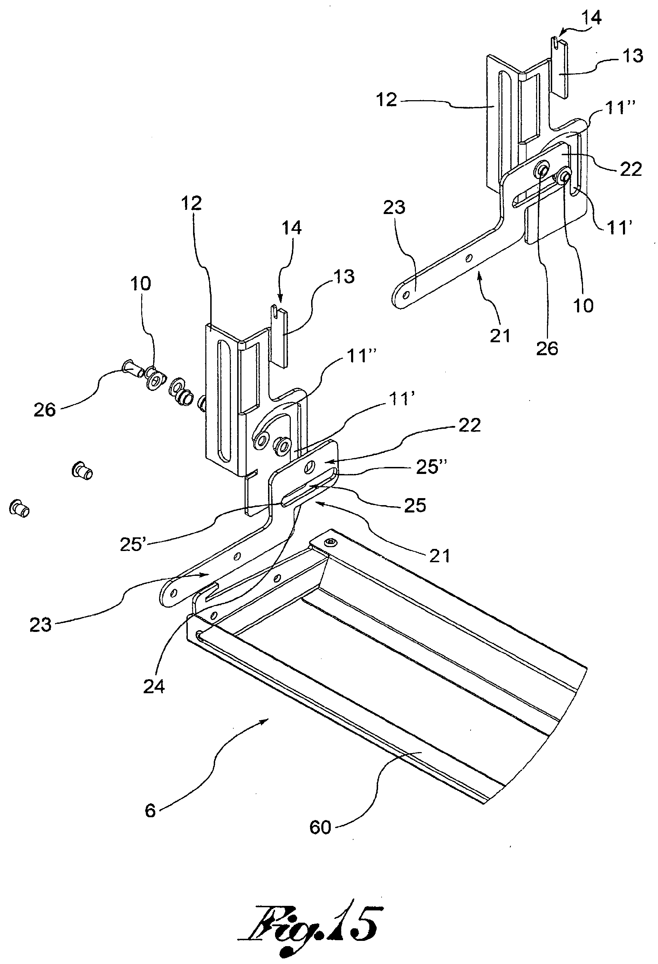

More in detail, arm 21 comprises at least two end portions 22 and 23. At a first end portion 22, the arm is connected to the pivot means; at the second end portion 23, the arm is connected to the access hatch. As shown in Figure 15, these two end portions 22 and 23 are arranged on opposite positions with respect to the abutment surface 24 of arm 21.

The access hatch 6 may be connected to arm 21 rigidly, that is, without the possibility of relative movement (as shown in the accompanying Figures), or it may be connected in a translatable manner relative to the arm.

Preferably, as shown in the accompanying Figures, arm 21 is rotationally connected to the pivot means 10 with freedom to translate with respect to them. Operationally, the translation of arm 21 with respect to the pivot means 10 determines the translation of the access hatch 6 relative to cornice 5, and thus also the displacement of the hatch between the engagement position (see Figures 7 and 11) and the release position (Figures 8 and 12) relative to blocking means of the access hatch associated with frame 2.

In particular, as shown in Figures 7 to 10, the connection with freedom of translation between arm 21 and the pivot means 10 is realized by a pin 10 sliding inside a slotted opening 25. Preferably, pin 10 is attached to frame 2, while the slotted opening 25 is formed on arm 21 in the first end portion 22. It is also possible to envisage the opposite configuration, that is, pin attached to the arm and slotted opening formed on the frame.

As an alternative to the solution shown in the accompanying Figures, the arm is rotationally connected to the pivot means without freedom to translate with respect to them. In this case, the access hatch is attached to the arm in a translatable manner so as to allow the same access hatch to shift between the engagement position and the release position.

Preferably, arm 21 is provided with a guide appendage 26 which is slidingly engaged inside a guide groove 11 made on frame 2 next to one of the two ends of opening 4 in relation to a direction of extension parallel to the rotation axis X. Such a groove 11 is shaped to guide arm 21 and thus the access hatch 6 according to a predefined and unique path in the shift between the open position and the closed position.

Advantageously, in the case in which the arm is rotationally connected to the pivot means with freedom of translation, as shown in Figures 7 to 10, the guide groove 11 comprises a straight portion 11' and a circular portion 11", mutually connected. The circular portion 11" is concentric to the rotation axis X.

Operationally, the straight portion 11' is adapted to impose a translation movement to the arm (and thus to the associated access hatch), while the circular portion 11" is adapted to impose a rotation movement around axis X to the arm (and thus to the associated access hatch).

In particular, the straight portion 11' has a development parallel to that of the slotted opening 25 formed on arm 21 and at which pin 10 of the pivot means is slidably inserted.

Preferably, the two portions 11' and 11" of groove 11 are separate from each other so as to separate the movement of translation from that of rotation and make the movement of arm 21 unique.

Advantageously, groove 11 is shaped in such a way that, starting from the closed position, the first portion encountered by the guide appendage 26 is the rectilinear one 11'. The translational movement imposed by the straight portion 11' is adapted to determine the disengagement of the access hatch from the blocking means and thus free the access hatch for the subsequent rotation imposed by the second circular portion 11" required to bring the access hatch outside opening 4.

Preferably, in the case in which two arms are provided for the same access hatch, a guide groove is provided for each arm (as shown in the accompanying Figures). This allows a better distribution of stresses. However, a solution may be envisaged with two arms and a guide groove for one arm only.

According to the embodiment shown in the accompanying Figures, the guide groove 11 is made on a bracket 12 attached to frame 2 next to one of the two ends of opening 4 in relation to a direction of extension parallel to the rotation axis X.

Advantageously, as shown in Figures 7 to 10, such a bracket 12 is placed rearwards of cornice 5 inside chamber 3.

Preferably, the pivot means 10 are formed on such a bracket 12, and in particular they consist of a fixed pin 10, on which arm 21 pivots to rotate around the rotation axis X.

Advantageously, also the blocking means of the access hatch are formed on such a bracket 12. In particular, they consist of a portion 13 of the bracket protruding beyond the profile of opening 13. On this projecting portion 13 there is formed an engagement seat 14 at which, when the access hatch 6 is brought to the closed position, engages in locking a corresponding engagement appendage 27 protruding from the access hatch 6.

The fact that the pivot means, the blocking means and the guide groove are made on a same component (i.e. the bracket) greatly simplifies the mounting of the access hatch on the frame. In fact, once the position of the bracket (or two brackets, if the arms - as preferred - are two) has been defined, all the components are in the correct position and therefore no other adjustments needed.

Referring to figures 7 to 10, the movement steps of the access hatch in the shift from the closed position to the open position will now be briefly described.

In the closed position (Figure 7), the access hatch 6 is arranged in the seat defined by cornice 5 which delimits opening 4. The engagement appendage 27 engages the engagement seat 14 formed on bracket 12, locking the access hatch in closing. The guide appendage 26 is located at the beginning of the straight portion 11'; pin 10 (fixed to bracket 12) engages the slotted opening 25 at its upper end 25'. The opening of the access hatch begins with lifting the access hatch 6 upward to release the blocking means (figure 8). The movement is only translation, as imposed by the straight portion 11' of groove 11. In parallel, the slotted opening 25 slides with respect to pin 10 up to engage it with the lower end 25". In this position, the guide appendage 26 has reached the end of the straight portion 11' and can engage the circular portion 11". The engagement appendage 27 has released the engagement seat 14. The access hatch is thus free to rotate about axis X defined by pin 10 (Figure 9). The rotation axis X is arranged at the lower end 25" of the slotted opening formed on arm 21. The guide appendage 26 starts running along the circular portion 11" of groove; the access hatch 6 leaves the seat defined by cornice 5, freeing opening 4. The rotation of the access hatch ends when the guide appendage 26 reaches the end of the circular portion 11' (figure 10). Arm 21 abuts on cornice 5 at the abutment surface 24. The access hatch 6 is arranged completely outside opening 4. In particular, the body of the access hatch 6 is located completely below plane m coplanar with the abutment surface 24, i.e. completely below the portion of the cornice against which the arm has gone into abutment. In the final position, the body of the access hatch is therefore placed outside the space in front of opening 4 for access to chamber 3.

The invention allows several advantages to be achieved, some of them already described.

The internal fitting element vehicles with tipping closing hatch according to the invention allows arranging in opening the access hatch fully out of the chamber without using external hinges. In other words, the invention allows combining the positive elements of the prior art solutions: positioning the entire access hatch outside the opening and the possibility of translation of the access hatch, to use blocking means of the fixed type.

Thanks to the presence of the guide groove, the access hatch of the internal fitting element according to the invention can be opened and closed in an easy and practical manner with smooth movements and without the risk of jamming. In fact, the movement of the access hatch is predefined and unique both in opening and in closing. The operator can thus open the access hatch acting in any part of the hatch and thus also using only one hand.

The internal fitting element for vehicles according to the invention is also easy and inexpensive to manufacture. In the first place, this is linked to the fact of being able to use blocking means of the fixed type. As already said, this greatly simplifies the mounting of the internal fitting element. Secondly, the use of a single component (bracket 12) on which there are formed pivot means, blocking means and guide groove, makes only one adjustment operation necessary, which is valid for all the elements associated with such a component.

The invention thus conceived thus achieves the intended purposes.

## Claims

1. Internal fitting element for vehicles with tipping closing hatch, comprising a support frame (2), which internally delimits at least one chamber (3) accessible by means of at least one opening (4) made on the frame (2) and delimited by a cornice (5), and at least one access hatch (6), which is positioned so as to at least partially close such opening (4) and is connected to the frame (2) so as to tip by means of pivot means (10) which define a rotation axis (X) around which the access hatch (6) can rotate to shift between a closed position and an open position, the cornice (5) which delimits the opening (4) defining a seat at which the access hatch is positioned in the closed position, the access hatch being translatable in relation to said cornice to shift between an attachment position and a release position in relation to blocking means of the access hatch associated to the frame, **characterised in that** the rotation axis (X) of the access hatch is rearward of said cornice (5) inside said chamber and **in that** the access hatch is mechanically connected to the pivot means (10) by means of at least one arm (21), sized in such a way that in the open position the access hatch is positioned entirely outside the opening.

2. Internal fitting element according to claim 1, wherein said arm is sized in such a way that in the open position the body of the access hatch (6) positions itself outside the space in front of the access opening (4) to the chamber.

3. Internal fitting element according to claim 1 or 2, wherein said at least one arm (21) is positioned at one of the two ends of the access hatch (6) in relation to a direction of extension parallel to the rotation axis (X).

4. Internal fitting element according to claim 1, 2 or 3, wherein said at least one arm (21) comprises an abutment surface (24) at which the arm abuts with the cornice (5) when the access hatch (6) is in the open position.

5. Internal fitting element according to claim 4, wherein the arm (21) comprises at least two end portions (22, 23), the arm being connected to the pivot means at a first end portion (22) and to the access hatch at the second end portion (23), said two portions being arranged in opposite positions in relation to the abutment surface (24) of the arm (21).

6. Internal fitting element according to one or more of the claims from 1 to 5, wherein said at least one arm (21) is rigidly connected to the access hatch (6).

7. Internal fitting element according to one or more of the claims from 1 to 5, wherein said access hatch (6) is connected to said at least one arm (21) so as to translate.

8. Internal fitting element according to one or more of the claims from 1 to 7, wherein said at least one arm (21) is rotationally connected to the pivot means (10) with the freedom to translate in relation thereto, the translation of the arm (21) in relation to the pivot means (10) determining the translation of the access hatch (6) in relation to the cornice (5).

9. Internal fitting element according to claim 8, wherein the connection between said at least one arm (21) and the pivot means (10) is realised by means of a pin (10) sliding inside a slotted opening (25), said pin (10) being attached to the frame and the slotted opening (25) being made on the arm (21) or vice versa.

10. Internal fitting element according to one or more of the previous claims, wherein the arm (21) is provided with a guide appendage (26) which is slidingly engaged inside a guide groove (11) made on the frame (2) next to one of the two ends of the opening (4) in relation to a direction of extension parallel to the rotation axis (X), said groove (11) being shaped to guide the arm (21) and thus the access hatch (6) according to a predefined path in the shift between the open position and the closed position.

11. Internal fitting element according to claim 10, wherein the guide groove (11) comprises a rectilinear section (11') and a circular section (11") connected to each other, the circular section (11') being concentric to the rotation axis (X).

12. Internal fitting element according to claim 10 or 11, wherein the guide groove (11) is made on a bracket (12) attached to the frame (2) next to one of the two ends of the opening (4) in relation to a direction of extension parallel to the rotation axis (X).

13. Internal fitting element according to claim 12, wherein said bracket (12) is placed rearwards of the cornice (5) inside the chamber (3).

14. Internal fitting element according to claim 12 or 13, wherein the pivot means (10) are made on said bracket (12).

15. Internal fitting element according to claim 12, 13 or 14, wherein the blocking means of the access hatch are made on said bracket (12).

## Patentansprüche

1. Inneneinbauelement mit kippbarem Deckel für Kraftfahrzeuge, umfassend einen Stützrahmen (2), welcher im Inneren mindestens eine Kammer (3) begrenzt, die mittels mindestens einer Öffnung (4) zugänglich ist, welche an dem Rahmen (2) ausgebildet und durch eine Leiste (5) abgegrenzt ist, und mindestens einen Zugangsdeckel (6), welcher so positioniert ist, dass er die Öffnung (4) wenigstens teilweise verschließt, und derart an dem Rahmen (2) befestigt ist, dass er mittels Schwenkmitteln (10) kippt, welche eine Drehachse (X) bilden, um die der Zugangsdeckel (6) zum Wechseln zwischen einer geschlossenen Stellung und einer offenen Stellung schwingen kann, wobei die die Öffnung (4) abgrenzende Leiste (5) einen Sitz bildet, an dem der Zugangsdeckel in der geschlossenen Stellung angeordnet ist, wobei der Zugangsdeckel in Bezug auf die Leiste zum Wechseln zwischen einer Befestigungsstellung und einer Freigabestellung in Bezug auf mit dem Rahmen verbundene Sperrmittel des Zugangsdeckels bewegbar ist, **dadurch gekennzeichnet, dass** die Drehachse (X) des Zugangsdeckels hinter der Leiste (5) in der Kammer liegt und dadurch dass der Zugangsdeckel durch mindestens einen Arm (21) mechanisch mit den Schwenkmitteln (10) verbunden ist, welcher so bemessen ist, dass der Zugangsdeckel in der offenen Stellung vollkommen außerhalb der Öffnung positioniert ist.

2. Inneneinbauelement nach Anspruch 1, wobei der Arm so bemessen ist, dass sich der Körper des Zugangsdeckels (6) in der offenen Stellung selbst außerhalb des Raums vor der Zugangsöffnung (4) zu der Kammer positioniert.

3. Inneneinbauelement nach Anspruch 1 oder 2, wobei der mindestens eine Arm (21) an einem der beiden Enden des Zugangsdeckels (6) in Bezug auf eine Verlaufsrichtung parallel zur Drehachse (X) positioniert ist.

4. Inneneinbauelement nach Anspruch 1, 2 oder 3, wobei der mindestens eine Arm (21) eine Anschlagfläche (24) umfasst, an der der Arm mit der Leiste (5) anschlägt, wenn der Zugangsdeckel (6) in der offenen Stellung ist.

5. Inneneinbauelement nach Anspruch 4, wobei der Arm (21) mindestens zwei Endabschnitte (22, 23) umfasst, wobei der Arm an einem ersten Endabschnitt (22) mit den Schwenkmitteln und an dem zweiten Endabschnitt (23) mit dem Zugangsdeckel verbunden ist, wobei die beiden Abschnitte in Bezug auf die Anschlagfläche (24) des Arms (21) an einander abgewandten Positionen angeordnet sind.

6. Inneneinbauelement nach einem oder mehreren der Ansprüche 1 bis 5, wobei der mindestens eine Arm (21) mit dem Zugangsdeckel (6) starr verbunden ist.

7. Inneneinbauelement nach einem oder mehreren der Ansprüche 1 bis 5, wobei der Zugangsdeckel (6) mit dem mindestens einen Arm (21) so verbunden ist, dass er sich bewegt.

8. Inneneinbauelement nach einem oder mehreren der Ansprüche 1 bis 7, wobei der mindestens eine Arm (21) drehbar mit den Schwenkmitteln (10) verbunden ist, mit der Freiheit sich in Bezug darauf zu bewegen, wobei die Bewegung des Arms (21) in Bezug auf die Schwenkmittel (10) die Bewegung des Zugangsdeckels (6) in Bezug auf die Leiste (5) bestimmt.

9. Inneneinbauelement nach Anspruch 8, wobei die Verbindung zwischen dem mindestens einen Arm (21) und den Schwenkmitteln (10) mittels eines Stifts (10) realisiert ist, welcher in einem Langloch (25) gleitet, wobei der Stift (10) an dem Rahmen angebracht ist und das Langloch (25) an dem Arm (21) ausgebildet ist oder umgekehrt.

10. Inneneinbauelement nach einem oder mehreren der vorhergehenden Ansprüche, wobei der Arm (21) mit einem Führungsansatz (26) ausgestattet ist, welcher in eine Führungsnut (11) gleitend eingreift, welche an dem Rahmen (2) neben einem der beiden Enden der Öffnung (4) in Bezug auf eine Verlaufsrichtung parallel zu der Drehachse (X) ausgebildet ist, wobei die Nut (11) so geformt ist, das sie den Arm (21), und damit den Zugangsdeckel (6) beim Wechseln zwischen der offenen Stellung und der geschlossenen Stellung entsprechend einem vorgegebenen Weg führt.

11. Inneneinbauelement nach Anspruch 10, wobei die Führungsnut (11) einen geradlinigen Abschnitt (11') und einen kreisförmigen Abschnitt (11") umfasst, welche miteinander verbunden sind, wobei der kreisförmige Abschnitt (11') konzentrisch zur Drehachse (X) ist.

12. Inneneinbauelement nach Anspruch 10 oder 11, wobei die Führungsnut (11) an einem Bügel (12) ausgebildet ist, welcher an dem Rahmen (2) neben einem der beiden Enden der Öffnung (4) in Bezug auf eine Verlaufsrichtung parallel zu der Drehachse (X) angebracht ist.

13. Inneneinbauelement nach Anspruch 12, wobei der Bügel (12) hinter der Leiste (5) in der Kammer (3) platziert ist.

14. Inneneinbauelement nach Anspruch 12 oder 13, wobei die Schwenkmittel (10) an dem Bügel (12) ausgebildet sind.

15. Inneneinbauelement nach Anspruch 12, 13, oder 14, wobei die Sperrmittel des Zugangsdeckels an dem Bügel (12) ausgebildet sind.

## Revendications

1. Composant d'intérieur pour véhicules avec une trappe de fermeture basculante, comprenant un cadre de support (2) qui délimite en interne au moins une chambre (3) accessible à l'aide d'au moins une ouverture (4) réalisée sur le cadre (2) et délimitée par une corniche (5), et au moins une trappe d'accès (6) qui est positionnée de sorte à fermer au moins partiellement une telle ouverture (4) et est reliée au cadre (2) de sorte à basculer à l'aide de moyens de pivotement (10) qui définissent un axe de rotation (X), autour duquel la trappe d'accès (6) peut tourner pour se déplacer entre une position fermée et une position ouverte, la corniche (5) qui délimite l'ouverture (4) définissant un siège, sur lequel la trappe d'accès est positionnée dans la position fermée, la trappe d'accès étant translatable par rapport à ladite corniche pour se déplacer entre une position d'attache et une position de libération par rapport aux moyens de blocage de la trappe d'accès associée au cadre, **caractérisé en ce que** l'axe de rotation (X) de la trappe d'accès est en arrière de ladite corniche (5) dans ladite chambre et **en ce que** la trappe d'accès est mécaniquement reliée aux moyens de pivotement (10) à l'aide d'au moins un bras (21) dimensionné de telle manière que dans la position ouverte, la trappe d'accès est positionnée entièrement à l'extérieur de l'ouverture.

2. Composant d'intérieur selon la revendication 1, dans lequel ledit bras est dimensionné de telle manière que dans la position ouverte, le corps de la trappe d'accès (6) se positionne lui-même en dehors de l'espace en face de l'ouverture d'accès (4) à la chambre.

3. Composant d'intérieur selon la revendication 1 ou 2, dans lequel ledit au moins un bras (21) est positionné sur l'une des deux extrémités de la trappe d'accès (6) par rapport à une direction d'extension parallèle à l'axe de rotation (X).

4. Composant d'intérieur selon la revendication 1, 2 ou 3, dans lequel ledit au moins un bras (21) comprend une surface de butée (24), contre laquelle le bras bute avec la corniche (5) lorsque la trappe d'accès (6) est dans la position ouverte.

5. Composant d'intérieur selon la revendication 4, dans lequel le bras (21) comprend au moins deux parties d'extrémité (22, 23), le bras étant relié aux moyens de pivotement sur une première partie d'extrémité (22) et à la trappe d'accès sur la seconde partie d'extrémité (23), lesdites deux parties étant agencées dans des positions en regard par rapport à la surface de butée (24) du bras (21).

6. Composant d'intérieur selon l'une ou plusieurs des revendications 1 à 5, dans lequel ledit au moins un bras (21) est rigidement relié à la trappe d'accès (6).

7. Composant d'intérieur selon l'une ou plusieurs des revendications 1 à 5, dans lequel ladite trappe d'accès (6) est reliée audit au moins un bras (21) de sorte à translater.

8. Composant d'intérieur selon l'une ou plusieurs des revendications 1 à 7, dans lequel ledit au moins un bras (21) est relié en rotation aux moyens de pivotement (10) avec la liberté de translater par rapport à ceux-ci, la translation du bras (21) par rapport aux moyens de pivotement (10) déterminant la translation de la trappe d'accès (6) par rapport à la corniche (5).

9. Composant d'intérieur selon la revendication 8, dans lequel la liaison entre ledit au moins un bras (21) et les moyens de pivotement (10) est réalisée à l'aide d'une broche (10) coulissant dans une ouverture fendue (25), ladite broche (10) étant attachée au cadre et l'ouverture fendue (25) étant réalisée sur le bras (21) ou vice versa.

10. Composant d'intérieur selon l'une ou plusieurs des revendications précédentes, dans lequel le bras (21) est doté d'un appendice de guidage (26) qui est engagé par coulissement dans une rainure de guidage (11) réalisée sur le cadre (2) à côté de l'une des deux extrémités de l'ouverture (4) par rapport à une direction d'extension parallèle à l'axe de rotation (X), ladite rainure (11) étant formée pour guider le bras (21) et ainsi la trappe d'accès (6) selon une voie prédéfinie dans le déplacement entre la position ouverte et la position fermée.

11. Composant d'intérieur selon la revendication 10, dans lequel la rainure de guidage (11) comprend une section rectiligne (11') et une section circulaire (11") reliées l'une à l'autre, la section circulaire (11') étant concentrique à l'axe de rotation (X).

12. Composant d'intérieur selon la revendication 10 ou 11, dans lequel la rainure de guidage (11) est réalisée sur un support (12) attaché au cadre (2) à côté de l'une des deux extrémités de l'ouverture (4) par rapport à une direction d'extension parallèle à l'axe de rotation (X).

13. Composant d'intérieur selon la revendication 12, dans lequel ledit support (12) est placé à l'arrière de la corniche (5) dans la chambre (3).

14. Composant d'intérieur selon la revendication 12 ou 13, dans lequel les moyens de pivotement (10) sont réalisés sur ledit support (12).

15. Composant d'intérieur selon la revendication 12, 13 ou 14, dans lequel les moyens de blocage de la trappe d'accès sont réalisés sur ledit support (12).
